# EUROPEAN PATENT APPLICATION

(11) **EP 4 632 100 A1**
(43) Date of publication of application: **15.10.2025**
(21) Application number: 24756933.8
(22) Date of filing: 14.02.2024
(51) Int. Cl.: C22C 38/00, H01F 1/147, H01F 27/245, C21D 8/12, C22C 38/60

(54) **GRAIN-ORIENTED ELECTRICAL STEEL SHEET AND LAMINATED IRON CORE**

(30) Priority: 15.02.2023 JP 2023022006
(71) Applicant: JFE Steel Corporation, Tokyo 100-0011 (JP)
(72) Inventor: ICHIHARA, Yoshihisa, Tokyo 100-0011 (JP); OMURA, Takeshi, Tokyo 100-0011 (JP); INOUE, Hirotaka, Tokyo 100-0011 (JP); NAKAMURA, Koji, Tokyo 100-0011 (JP)
(74) Representative: Haseltine Lake Kempner LLP
(86) International application number: PCT/JP2024/005116
(87) International publication number: WO 2024/172093

(57) **Abstract**

Provided are a grain-oriented electrical steel sheet and stacked iron core having properties that can achieve both low iron loss and low noise in transformers by suppressing vibration caused by electromagnetic forces at the joint parts of the stacked iron core. The grain-oriented electrical steel sheet comprises, on at least one of both surfaces thereof, a plurality of strain regions that extend linearly in a direction transverse to a rolling direction of the steel sheet and are arranged at intervals in the rolling direction, wherein a standard deviation σBr of residual magnetic flux density Br determined from a hysteresis loop measured by exciting the steel sheet to 1.7 T with the rolling direction as a magnetization direction is 0.38 or less.

## Description

### TECHNICAL FIELD

The present disclosure relates to a grain-oriented electrical steel sheet, particularly a grain-oriented electrical steel sheet suitable as material for stacked iron cores for transformers, and to a stacked iron core using the same.

### BACKGROUND

Grain-oriented electrical steel sheets are used as material for iron cores of transformers, etc. In such applications as material for iron cores of transformers, it is necessary to reduce energy loss and noise. Energy loss is influenced by the iron loss of the grain-oriented electrical steel sheet, and noise is influenced by the magnetostrictive property of the grain-oriented electrical steel sheet.

In recent years, reduction of energy loss in transformers and reduction of noise during operation of transformers are strongly required in view of energy saving and environmental regulations. It is therefore crucial to develop grain-oriented electrical steel sheets having excellent iron loss property and magnetostrictive property.

The iron loss of a grain-oriented electrical steel sheet is mainly composed of hysteresis loss and eddy current loss. Examples of methods proposed to reduce hysteresis loss include highly aligning (110)[001] crystal orientation called Goss orientation with the rolling direction of the steel sheet, and reducing impurities in the steel sheet. Examples of methods proposed to reduce eddy current loss include increasing the electrical resistance of the steel sheet by adding Si, and imparting film tension in the rolling direction of the steel sheet. However, these methods have production limitations when pursuing further reduction in the iron loss of grain-oriented electrical steel sheets.

In view of this, magnetic domain refining technology has been developed as a method for further reducing the iron loss of grain-oriented electrical steel sheets. Magnetic domain refining technology is a method of reducing the iron loss, especially eddy current loss, of grain-oriented electrical steel sheets by introducing magnetic flux non-uniformity into the steel sheet after final annealing or after baking of an insulating coating by physical means such as formation of grooves or introduction of localized thermal strains to thus refine the width of the 180° magnetic domains (main magnetic domains) formed in the rolling direction.

For example, Patent Literature (PTL) 1 proposes a technology of introducing linear grooves of 300 µm or less in width and 100 µm or less in depth on the surface of a steel sheet to reduce iron loss from 0.80 W/kg or more to 0.70 W/kg or less. PTL 2 proposes a method of applying plasma flames in the sheet transverse direction on the surface of a steel sheet after secondary recrystallization to locally introduce thermal strain. As a result of introduction of thermal strain, for a steel sheet whose magnetic flux density (B₈) when excited with a magnetizing force of 800 A/m is 1.935 T, iron loss (W_{17/50}) when excited with a maximum magnetic flux density of 1.7 T and a frequency of 50 Hz is reduced to 0.680 W/kg.

The method of introducing linear grooves as disclosed in PTL 1 is called heat resistant magnetic domain refinement because the magnetic domain refining effect is not lost even when stress relief annealing is performed after the iron core is formed. Meanwhile, the method of introducing thermal strain as disclosed in PTL 2 is called non-heat resistant magnetic domain refinement because the effect by introducing thermal strain is lost due to strain relief annealing.

Non-heat resistant magnetic domain refinement is known to significantly reduce eddy current loss by locally introducing thermal strain into the steel sheet but also cause degradation in magnetic properties such as increased hysteresis loss and increased magnetostriction due to the introduction of strain. In particular, magnetostriction is known to be one of the noise sources of transformers. It is known that larger magnetostriction causes greater noise. Thus, in non-heat resistant magnetic domain refined materials, there is a trade-off relationship between the iron loss and noise of transformers. Hence, a method to achieve both low iron loss and low noise needs to be developed.

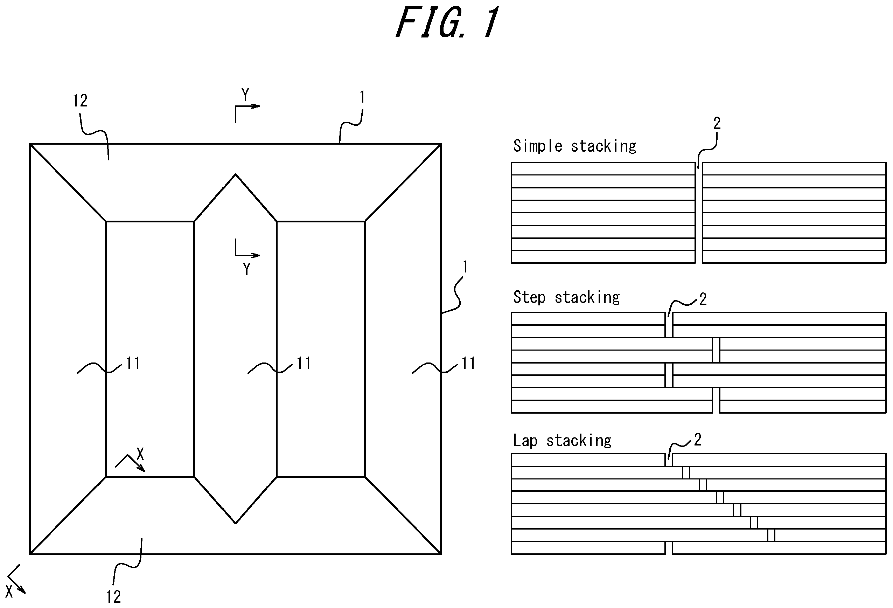

Besides magnetostriction, electromagnetic vibration of iron cores is also known to be a cause of transformer noise. Grain-oriented electrical steel sheets subjected to non-heat resistant magnetic domain refinement are mainly used as stacked iron cores (laminated iron cores) for transformers. FIG. 1 is a schematic diagram of the structure of a stacked iron core. A stacked iron core is an iron core having a structure in which grain-oriented electrical steel sheets cut into beveled materials 1 such as legs 11 and yokes 12 are stacked in the sheet thickness direction. The left side of FIG. 1 is a plan view of the stacked iron core placed with the steel sheet surface facing up, and the right side of FIG. 1 illustrates examples of X-X and Y-Y cross sections of the stacked iron core. As illustrated in FIG. 1, the stacked iron core includes joint parts 2 between the beveled materials 1, and interlaminar flux occurs periodically at the joint parts 2 as magnetic flux inside the steel sheets circulates. During the occurrence of such interlaminar flux at the joint parts 2, the ends of the steel sheets are in a magnetized state, so that electromagnetic vibration occurs due to the magnetic attraction between the ends and the magnetic repulsion between the layers. As a method of reducing transformer noise, suppression of electromagnetic vibration has also been proposed in the past.

To reduce noise caused by electromagnetic vibration, PTL 3 proposes making the iron core cross-sectional area of the yokes larger than the iron core cross-sectional area of the legs, and PTL 4 proposes a method of suppressing vibration by providing viscoelastic resin layers between stacked steel sheets.

### CITATION LIST

### Patent Literature

- PTL 1:: JP H6-22179 B2
- PTL 2:: JP H7-192891 A
- PTL 3:: JP H11-307368 A
- PTL 4:: JP 2009-224531 A

### SUMMARY

### (Technical Problem)

The foregoing measures to suppress vibration caused by electromagnetic forces between steel sheets can achieve a certain effect, but have the following problems. For example, with the method described in PTL 3, the structure of securing a larger cross-sectional area for the yokes than the legs tends to cause an increase in transformer size and require higher production costs.

With the method of providing viscoelastic resin layers between stacked steel sheets as proposed in PTL 4, the effective cross-sectional area of the steel sheets in the legs decreases, so that each steel sheet is excited to a higher magnetic field compared with iron cores of the same size and thereby increasing the loss (iron loss). To avoid this, increasing the iron core size is inevitable.

It could therefore be helpful to provide a grain-oriented electrical steel sheet and stacked iron core having properties that can achieve both low iron loss and low noise in transformers by a mechanism different from the conventional technologies, specifically, by suppressing vibration caused by electromagnetic forces at the joint parts of the stacked iron core.

### (Solution to Problem)

We conducted extensive research to solve the problems stated above.

The vibration of the steel sheets at the joint parts 2 of the iron core includes vibration caused by magnetic forces acting on both end surfaces of the joint parts 2 and vibration caused by magnetic forces acting in the stacking (i.e. vertical) direction of the joint parts 2. Detailed investigation on these vibrations revealed that the phase of vertical vibration differs depending on the position between the layers, and phase shift (i.e. phase difference) is particularly significant when the external magnetic field H applied to the legs 11 is 0 (zero), resulting in an increase in transformer noise.

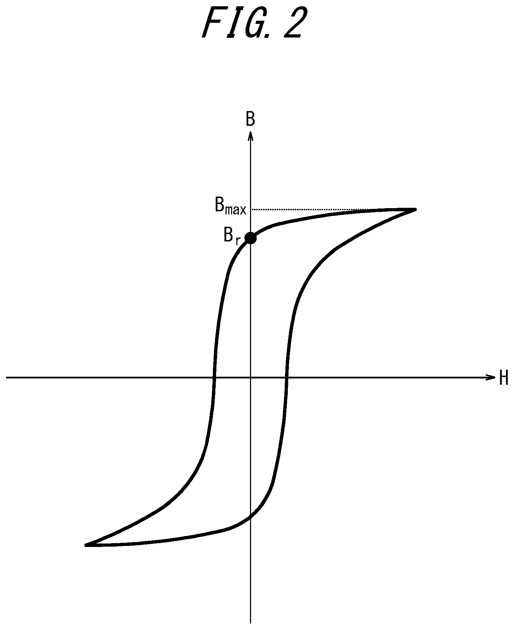

To conduct more detailed investigation, SST samples were cut out from the steel sheet of each layer forming the foregoing iron core, and the hysteresis loop (B-H curve, see FIG. 2) of each steel sheet was measured. As a result, the magnetic flux density Br (T) remaining in the steel sheet when the external magnetic field H was 0 varied between the steel sheets. We thus discovered that, when these steel sheets are stacked, at an external magnetic field of 0 A/m, each of the stacked steel sheets has a different magnetic flux density and accordingly magnetic attractive/repulsive forces act unevenly between the layers of the iron core joint parts, as a result of which irregular vibration occurs and the increase in noise ensues.

The present disclosure is based on these discoveries.

We thus provide the following.
[1] A grain-oriented electrical steel sheet comprising, on at least one of both surfaces thereof, a plurality of strain regions that extend linearly in a direction transverse to a rolling direction of the steel sheet and are arranged at intervals in the rolling direction, wherein a standard deviation σBr of residual magnetic flux density Br (the value of sample magnetic flux density B (T) when external magnetic field strength H = 0) determined from a hysteresis loop measured by exciting the steel sheet to 1.7 T with the rolling direction as a magnetization direction is 0.38 or less.
[2] The grain-oriented electrical steel sheet according to [1], wherein the standard deviation σBr is 0.36 or less.
[3] A stacked iron core produced by stacking a plurality of the grain-oriented electrical steel sheet according to [1] or [2].

### (Advantageous Effect)

It is thus possible to suppress variation in residual magnetic flux densities between grain-oriented electrical steel sheets, despite they being non-heat resistant magnetic domain refined materials with linear (thermal) strain regions formed thereon. Such grain-oriented electrical steel sheets can be used in a stacked iron core to provide a transformer with low iron loss and low noise.

### BRIEF DESCRIPTION OF THE DRAWINGS

In the accompanying drawings:
FIG. 1 is a schematic diagram illustrating the structure of a stacked iron core;
FIG. 2 is a diagram illustrating a typical example of a hysteresis loop;
FIG. 3 is a graph illustrating the influence of σBr on transformer loss;
FIG. 4 is a graph illustrating the influence of σBr on transformer noise; and
FIG. 5 is a conceptual diagram illustrating sheet passing speed.

### DETAILED DESCRIPTION

Experimental results that led to the presently disclosed technology will be described below.

### (Experiment 1)

The surface of a product steel strip of a grain-oriented electrical steel sheet produced by a typical production process using a steel slab with the chemical composition shown in Table 1 and including a forsterite film and an insulating coating (tension coating) was irradiated with an electron beam to perform magnetic domain refining treatment. Here, the power of the electron beam was varied in the range of 800 W to 1200 W, the beam irradiation interval in the steel sheet passing direction was 5 mm, and the beam scanning rate was 80 m/s. Beveled materials were cut out from various parts of the sample thus obtained. For each beveled material, the iron loss and the hysteresis loop were measured by a single-sheet magnetic property measurement method in accordance with JIS C 2556 to calculate the residual magnetic flux density Br (T). After this, from all of the beveled materials for which Br was calculated, subgroups of beveled materials were selected so that the mean of Br would match the mean of the population distribution and the standard deviation σBr would be different. A three-phase stacked iron core model transformer (iron core weight 50 kg) was then produced for each subgroup. For each of the produced three-phase stacked iron core model transformers, the iron loss property (transformer loss) when the magnetic flux density of the iron core legs was 1.7 T at a frequency of 50 Hz was measured. As the iron loss property at 1.7 T and 50 Hz, no-load loss was measured using a wattmeter. Simultaneously, each model transformer was excited in a soundproof chamber under the conditions of maximum magnetic flux density Bm = 1.7 T and frequency of 50 Hz, and the noise level (dBA) (transformer noise) was measured using a sound level meter.

**[Table 1]**

| Chemical composition (mass%) | | | | | | | | |
|---|---|---|---|---|---|---|---|---|
| C | Si | Mn | Ni | Al | N | Se | S | O |
| 0.08 | 3.4 | 0.1 | 0.01 | 0.0260 | 0.007 | 0.0110 | 0.003 | 0.0025 |

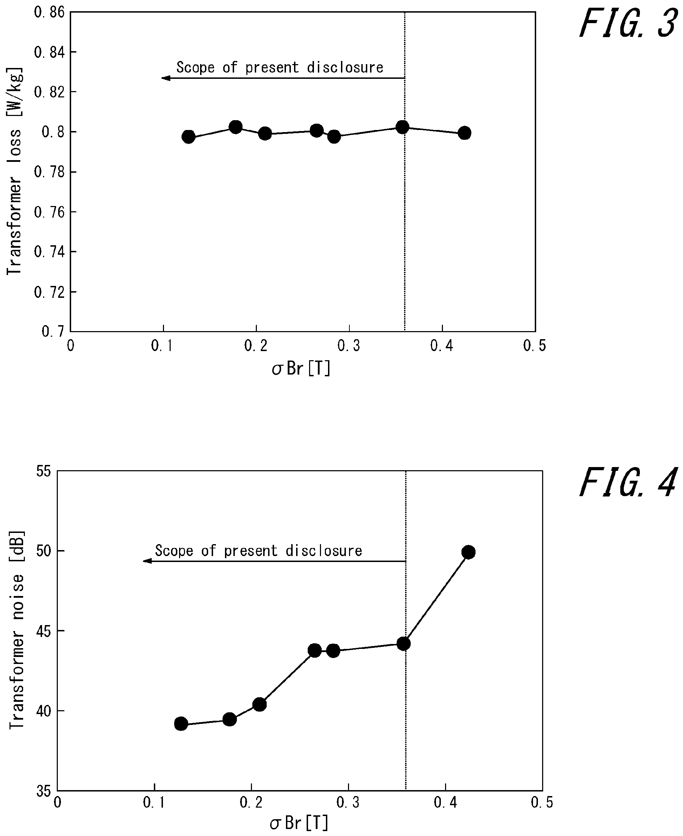

FIG. 3 illustrates the influence of σBr on transformer loss as a result of compiling the transformer loss measurement results. As illustrated in FIG. 3, transformer core loss was approximately the same regardless of σBr. This is considered to be because, as a result of the beveled materials being selected so that the mean of Br would be the same, the average effect of magnetic domain refinement was approximately the same. In other words,it was thus revealed that the iron loss reduction effect by non-heat resistant magnetic domain refinement applied to the steel sheet is not dependent on the standard deviation σBr of residual magnetic flux density Br as long as the means of residual magnetic flux density Br are approximately the same.

FIG. 4 illustrates the influence of σBr on transformer noise as a result of compiling the transformer noise measurement results. As illustrated in FIG. 4, transformer noise exhibited dependence on σBr. This is considered to be because, due to the increased variation in the steel sheet residual magnetic flux when the excitation magnetic field was 0 A/m, irregular vibration with a phase shift occurred and consequently the noise increased. In particular, the noise increased significantly when σBr was more than 0.38. And thus, if σBr is 0.38 or less, transformer noise can be reduced while maintaining the iron loss reduction effect by magnetic domain refinement. As illustrated in FIG. 4, σBr is more preferably 0.30 or less, further preferably 0.26 or less, and even more preferably 0.21 or less.

A preferred embodiment of the present disclosure will be described in detail below. The present disclosure is, however, not limited to the structure disclosed in this embodiment, and various changes are possible within the scope of the present disclosure.

### [Grain-oriented electrical steel sheet]

The chemical composition of a slab for a grain-oriented electrical steel sheet according to the present disclosure is any chemical composition that allows secondary recrystallization. In the case of using an inhibitor, for example, Al and N are added in appropriate amounts if the inhibitor is an AlN-based inhibitor, and Mn and one or both of Se and S are added in appropriate amounts if the inhibitor is a MnS/MnSe-based inhibitor. Both of these inhibitors may be used in combination. The preferred contents of Al, N, S, and Se in this case are as follows:
Al: 0.010 mass% to 0.065 mass%,
N: 0.0050 mass% to 0.0120 mass%,
S: 0.005 mass% to 0.030 mass%, and
Se: 0.005 mass% to 0.030 mass%.

The present disclosure may also be applied to inhibitorless grain-oriented electrical steel sheets with limited contents of Al, N, S, and Se. The contents of Al, N, S, and Se in this case are preferably limited as follows:
Al: less than 0.010 mass%,
N: less than 0.0050 mass%,
S: less than 0.0050 mass%, and
Se: less than 0.0050 mass%.

The representative basic components and optionally added components of the steel material (slab) for the grain-oriented electrical steel sheet according to the present disclosure will be described in detail.

### C: 0.08 mass% or less

C is added to improve the hot-rolled sheet microstructure. If the C content is more than 0.08 mass%, it is difficult to decarburize to 50 mass ppm or less at which no magnetic aging occurs during the production process. The C content is therefore preferably 0.08 mass% or less. No lower limit is placed on the C content, given that the steel material, even without containing C, undergoes secondary recrystallization.

### Si: 2.0 mass% to 8.0 mass%

Si is an element effective in increasing the electrical resistance of steel and reducing iron loss. If the Si content is less than 2.0 mass%, the improvement effect by Si is not fully exerted. If the Si content is more than 8.0 mass%, not only workability and sheet passing property degrade significantly but also magnetic flux density decreases. The Si content is therefore preferably in the range of 2.0 mass% to 8.0 mass%.

### Mn: 0.005 mass% to 1.0 mass%

Mn is an element necessary for improving hot workability. If the Mn content is less than 0.005 mass%, its effect is insufficient. If the Mn content is more than 1.0 mass%, magnetic flux density degrades. The Mn content is therefore preferably in the range of 0.005 mass% to 1.0 mass%.

In addition to the foregoing basic components, one or more selected from the following components known to be effective in improving magnetic properties may be optionally added:
Ni: 0.03 mass% to 1.50 mass%,
Sn: 0.01 mass% to 1.50 mass%,
Sb: 0.005 mass% to 1.50 mass%,
Cu: 0.03 mass% to 3.0 mass%,
P: 0.03 mass% to 0.50 mass%,
Mo: 0.005 mass% to 0.10 mass%, and
Cr: 0.03 mass% to 1.50 mass%.

Ni is an element effective in improving the hot-rolled sheet microstructure and improving magnetic properties. If the Ni content is less than 0.03 mass%, its contribution to improved magnetic properties is little. If the Ni content is more than 1.50 mass%, secondary recrystallization is unstable and magnetic properties degrade. The Ni content is therefore preferably in the range of 0.03 mass% to 1.50 mass%.

Sn, Sb, Cu, P, Mo, and Cr are also elements that improve magnetic properties. If the content of each of these elements is less than the above lower limit, its effect is insufficient. If the content of each of these elements is more than the above upper limit, the growth of secondary recrystallized grains is inhibited, causing degradation in magnetic properties. The content of each of these elements is therefore preferably in the above range.

The balance other than the above-described components consists of Fe and inevitable impurities.

In the production of the grain-oriented electrical steel sheet according to the present disclosure, a steel material (slab) for the grain-oriented electrical steel sheet having the above-described chemical composition is subjected to hot rolling and then to hot-rolled sheet annealing. The hot-rolled sheet is then subjected to cold rolling once or twice, and a steel strip with the final sheet thickness is obtained. The steel strip is then subjected to decarburization annealing. After an annealing separator mainly composed of MgO is applied to the steel strip, the steel strip is coiled and subjected to final annealing intended for secondary recrystallization and forsterite film formation. The steel strip after the final annealing is subjected to flattening annealing, and then a magnesium phosphate-based tension coating is formed to obtain a steel strip of a product sheet.

The production of the grain-oriented electrical steel sheet according to the present disclosure includes a magnetic domain refining process of introducing thermal strain by energy beam irradiation on the surface of the steel strip of the product sheet, i.e. the grain-oriented electrical steel sheet (steel strip) after the tension coating is formed. If thermal strain is introduced by energy beam irradiation before the tension coating is formed, the thermal strain is relaxed or released by the heat treatment (baking) performed during the formation of the tension coating, making it impossible to achieve the desired magnetic domain refining effect.

### - Standard deviation σBr of residual magnetic flux density Br: 0.38 or less

It is important that variation (deviation) in residual magnetic flux density Br in the grain-oriented electrical steel sheet according to the present disclosure is suppressed. Specifically, it is important that the standard deviation σBr of residual magnetic flux density Br (the value of sample magnetic flux density B (T) when external magnetic field strength H = 0) in the steel sheet is 0.38 or less. If σBr is 0.38 or less, transformer noise can be reduced while maintaining the iron loss reduction effect by magnetic domain refinement, as mentioned above. σBr is preferably 0.36 or less, more preferably 0.34 or less, and further preferably 0.32 or less. When σBr is smaller, transformer noise can be reduced more. Although no lower limit is placed on σBr, the lower limit is theoretically zero.

The variation in residual magnetic flux density Br, which is a key factor in the present disclosure, includes variation caused by the material of the steel sheet, such as crystal orientation, internal strain, and amounts of fine particles and precipitates, and variation caused by magnetic domain refining treatment, such as uniformity of thermal strain in the sheet passing direction and the sheet transverse direction. The former variation is not very influential and is difficult to suppress, but suppressing the variation in sheet temperature in the rolling and annealing processes is effective.

The latter variation is presumed to be caused by slight changes in the heat input form of energy beam irradiation due to changes in the production line speed during operation. In other words, when the amount of thermal strain introduced into the steel sheet is greater, magnetization reversal is easier, so that the residual magnetic flux density Br is lower. In the case where magnetic domain refining treatment is performed with a constant processing frequency (production line speed/processing interval), if the production line speed changes, the interval between the thermal strain regions in the sheet passing direction changes, and the strain amount per unit area changes depending on the position in the longitudinal direction. This causes variation in residual magnetic flux density Br in the grain-oriented electrical steel sheet that has undergone magnetic domain refining treatment. It is presumed that, in such a case, variation in Br can be suppressed by such control that changes the amount of heat input depending on the production line speed so that the strain amount per unit area will be constant.

In the case where the interval between the thermal strain regions arranged in the sheet passing direction is constant, the processing frequency changes, and the balance between the scanning and standby times of the energy beam changes. During beam standby, a beam receiver called a beam collector is irradiated with the energy beam. If the balance between the scanning and standby times changes, the beam is scattered by fumes and gases generated from the beam receiver and the appropriate focus condition changes. In such a case, an effective way of improving σBr is to set an appropriate focus condition for each production line speed in advance and change the focus condition depending on the operating line speed. An example of the method of setting appropriate focus is to continuously apply the beam with a pattern simulating the actual operating conditions until the beam reaches a steady state and adjust the focus in the steady state. Even without taking such measures, the variation can be reduced by, during producing beveled materials, performing magnetic measurement and removing any beveled material that deviates greatly from the mean. Thus, any of the measures may be taken in a balanced manner from the viewpoint of workload and yield rate.

### - Method of measuring standard deviation σBr of residual magnetic flux density Br

The method of measuring the standard deviation σBr of residual magnetic flux density Br in the present disclosure is as follows: SST test pieces (samples) of 100 mm in the width direction and 280 mm in the longitudinal direction are collected from a plurality of locations in the longitudinal direction of the grain-oriented electrical steel sheet (steel strip) after magnetic domain refining treatment, and the hysteresis loop is measured by a single-sheet magnetic property measurement method in accordance with JIS C 2556 to calculate the residual magnetic flux density Br (T) of each sample. The standard deviation σBr for Br of all samples calculated in this way is taken as the evaluation criterion for the variation in residual magnetic flux density Br. A larger number (N) of samples collected in the longitudinal direction of the grain-oriented electrical steel sheet (steel strip) and measured is more desirable, but is likely to require a higher workload for cutting out the samples and cause a lower yield rate. Therefore, the number N is preferably 9 or more. The number N is preferably 90 or less. The number N is more preferably 15 or more. The number N is more preferably 75 or less.

### <Non-heat resistant magnetic domain refinement>

Next, non-heat resistant magnetic domain refinement used in the magnetic domain refining process in the present disclosure will be described.

An effective way of performing non-heat resistant magnetic domain refinement is to use a laser with a wavelength of 400 nm to 1200 nm, which has high absorptance in metals, or use an electron beam with high transmissivity.

The conditions specific to electron beam irradiation in the present disclosure will be described in more detail below.

### - Accelerating voltage: 60 kV or more and 300 kV or less

A higher accelerating voltage is more desirable because the straightness of electrons increases and the thermal effect on the outside of the beam irradiated portion decreases. For this reason, the accelerating voltage is 60 kV or more. The accelerating voltage is more preferably 90 kV or more, and further preferably 120 kV or more.

If the accelerating voltage is excessively high, it is difficult to shield X-rays generated due to electron beam irradiation. The accelerating voltage is therefore preferably 300 kV or less from a practical perspective. The accelerating voltage is more preferably 200 kV or less.

### - Beam current: 0.5 mA to 40 mA

A lower beam current is more desirable from the viewpoint of the beam diameter. If the current is high, the beam diameter tends to be large due to Coulomb repulsion. Accordingly, in the present disclosure, the beam current is preferably 40 mA or less. If the beam current is excessively low, energy for forming strain is insufficient. The beam current is therefore preferably 0.5 mA or more.

### - Vacuum in beam irradiation region

The electron beam is subjected to scattering by gas molecules, and the beam diameter or the halo diameter increases or the energy decreases, for example. Hence, higher vacuum in the beam irradiation region is better. The vacuum in the beam irradiation region preferably has a pressure of 3 Pa or less. Although no lower limit is placed on the vacuum, if the vacuum is excessively low, the costs of a vacuum system such as a vacuum pump increase. The vacuum in the beam irradiation region therefore preferably has a pressure of 10⁻⁵ Pa or more.

The conditions specific to laser irradiation in the present disclosure will be described in more detail below.

### - Laser power: 50 W or more and 5000 W or less

If the laser power is low, it is necessary to decrease the scanning speed in order to provide sufficient energy to impart thermal strain. Here, an excessive decrease in the speed leads to lower production efficiency. If the laser power is high, thermal strain can be imparted easily, but damage to the laser conveyance system increases and the frequency of maintenance increases, leading to lower production efficiency. From these viewpoints, the laser power is preferably 50 W or more and 5000 W or less.

The irradiation conditions common to electron beam irradiation and laser beam irradiation will be described below.

### - Beam diameter or spot diameter: 300 µm or less

A smaller beam diameter in electron beam irradiation or a smaller spot diameter in laser beam irradiation is more desirable because strain can be introduced locally. Hence, in the present disclosure, the beam diameter or spot diameter of the energy beam is preferably 300 µm or less, more preferably 280 µm or less, and further preferably 260 µm or less. In the present disclosure, the beam diameter or spot diameter refers to the full width at half maximum of the beam profile of the electron beam or laser beam obtained by the slit method using a slit of 30 µm in width.

### - Deflection speed: 5 m/s to 400 m/s

A lower beam deflection speed is more preferable because a larger amount of heat can be input to the steel sheet per unit length. If the deflection speed is excessively low, however, the processing region per unit time decreases, and accordingly production efficiency decreases. The deflection speed is therefore preferably 5 m/s or more. If the deflection speed is excessively high, a power source capacity for providing the heat input necessary to melt the steel sheet is required to be expanded, which leads to an increase in the size of the line. The deflection speed is therefore preferably 400 m/s or less.

### - Angle between thermal strain formation direction and rolling direction: within ±30°

When the stretching direction of the thermal strain formation portion is tilted more from the sheet transverse direction, the amount of magnetic poles generated at the interface between the closure domain and the main magnetic domain decreases, so that the magnetic domain refining effect lessens. The angle between the stretching direction of the thermal strain formation portion and the sheet transverse direction is therefore preferably within ±30°.

### [Stacked iron core]

A stacked iron core according to the present disclosure is produced by stacking a plurality of grain-oriented electrical steel sheets according to the present disclosure in which the standard deviation σBr of magnetic flux density Br (T) remaining in the steel sheet when the external magnetic field H is 0 is 0.38 or less. The stacked iron core according to the present disclosure can thus suppress vibration caused by electromagnetic forces at the joint parts between the stacked steel sheets and achieve both low iron loss and low noise in transformers.

The stacked iron core according to the present disclosure preferably has, but is not limited to, a structure in which a magnetic circuit is formed by combining cut sheets of a plurality of grain-oriented electrical steel sheets so that the magnetization direction inside the iron core will match the rolling direction of the grain-oriented electrical steel sheets. An example of such a stacked iron core is a three-phase stacked iron core as illustrated in FIG. 1. In a stacked iron core having such a structure, the cut sheets butt or overlap (joint parts), and electromagnetic vibration occurring at such locations can be effectively suppressed.

As an example of the method of producing the stacked iron core according to the present disclosure, a method of producing a three-phase stacked iron core made up of three legs 11 and two yokes 12 as illustrated in FIG. 1 will be described. A steel strip of the grain-oriented electrical steel sheet according to the present disclosure is slit to the desired sheet widths of the legs and yokes to produce slitted strips. The slitted strips are sheared to the desired steel sheet lengths to produce steel sheets (beveled materials). Here, the shear direction may be 90 degrees to the rolling direction (i.e. may be a direction orthogonal to the rolling direction), or may be tilted to some extent. V-shape processing may be performed, like the central leg 11 in FIG. 1. The beveled materials thus produced are combined so that the rolling direction of the steel sheet will match the magnetization direction inside the iron core to form one layer. The joint parts may be provided so that all steel sheets will be present in the same plane (butt joints), or steel sheets may overlap at at least one joint part (overlap joints). Layers that are each the one layer are then stacked in the sheet thickness direction to produce a stacked iron core. Here, the sheet widths to be slit may be changed in the thickness direction of the stacked iron core, and different grain-oriented electrical steel sheets may be used depending on the position inside the structure of the stacked iron core. The joint part stacking method may be any one selected from simple stacking, step stacking, and lap stacking illustrated in FIG. 1, or any combination of these as necessary.

In the present disclosure, processes and production conditions other than those described above may be in accordance with known production methods for grain-oriented electrical steel sheets and stacked iron cores.

### EXAMPLES

### (Example 1)

More detailed description will be given below by way of examples. The following examples merely represent preferred examples, and the present disclosure is not limited to these examples. Modifications can be made within the range in which the subject matter of the present disclosure is applicable, with such modifications being also included in the technical scope of the present disclosure.

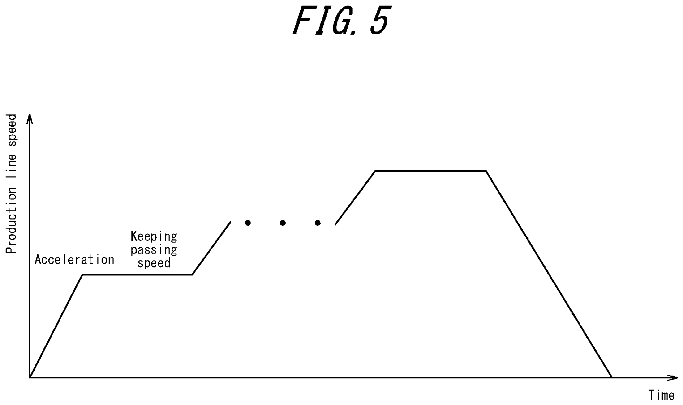

The surface on one side of each 300 mm wide product steel strip after final annealing and insulating coating formation, which was produced by a typical grain-oriented electrical steel sheet production process from a steel slab having the chemical composition shown in Table 1 or 2, was irradiated with a laser beam or an electron beam to perform magnetic domain refining treatment. FIG. 5 is a conceptual diagram of the sheet passing speed in the production line for the magnetic domain refining treatment. As illustrated in FIG. 5, the production line speed LS was accelerated at regular intervals and increased from 10 m/min to 140 m/min. In FIG. 5, "..." represents repeated acceleration and keeping passing speed. The nine conditions shown in Table 3 were used as the energy beam irradiation conditions, and one steel strip was prepared for each condition. The beam irradiation interval in the steel sheet passing direction was adjusted to 6 mm in the case where the processing frequency was varied. In the case where the processing frequency was fixed, the processing frequency was set to 194.4 Hz so that the processing interval would be 6 mm at a production line speed of 70 m/min. The beam scanning rate was 120 m/s.

**[Table 2]**

| Chemical composition (mass%) | | | | | | | |
|---|---|---|---|---|---|---|---|
| C | Si | Mn | Ni | Al | N | Se | S |
| 0.06 | 3.6 | 0.3 | 0.01 | 0.0170 | 0.006 | 0.0100 | 0.0015 |

### [Table 3]

**Table 3**

| Irradiation condition | Energy beam | Beam power | Focus* | Processing frequency** | Scanning time | Standby time |
|---|---|---|---|---|---|---|
| E1 | Electron beam | 1 kW | Constant | LS/360 kHz | 2.5 ms | 360/LS-2.5 ms |
| E2 | Electron beam | 1 kW | Switched for each LS | LS/360 kHz | 2.5 ms | 360/LS-2.5 ms |
| E3 | Electron beam | 1 kW | Constant | 194.4 Hz | 2.5 ms | 2.64 ms |
| E4 | Electron beam | LS/70 kW | Constant | 194.4 Hz | 2.5 ms | 2.64 ms |
| L1 | Laser | 600 W | Constant | LS/360 kHz | 2.5 ms | 360/LS-2.5 ms |
| L2 | Laser | 600 W | Switched for each LS | LS/360 kHz | 2.5 ms | 360/LS-2.5 ms |
| L3 | Laser | 600 W | Constant | 194.4 Hz | 2.5 ms | 2.64 ms |
| L4 | Laser | 600LS/70 W | Constant | 194.4 Hz | 2.5 ms | 2.64 ms |
| RO | - | - | - | - | - | - |

| | | | | | | |
|---|---|---|---|---|---|---|
| *) Whether beam focus condition is switched. LS is production line speed (m/min). **) Processing frequency = production line speed LS (m/min)/processing interval (mm) | | | | | | |

From each of the nine steel strips produced under the nine conditions, 45 test pieces (samples) of 100 mm in width and 280 mm in length were cut out. For each test piece, the hysteresis loop was measured by the single-sheet magnetic property measurement method described in JIS C 2556, and the residual magnetic flux density Br (T) and its standard deviation σBr were calculated. After this, beveled materials were cut out from each steel strip to produce a three-phase stacked iron core model transformer (iron core weight 50 kg). For each of the produced transformers, the iron loss property when the magnetic flux density of the iron core legs was 1.7 T at a frequency of 50 Hz was measured. As the iron loss property at 1.7 T and 50 Hz, no-load loss was measured using a wattmeter. Simultaneously, each model transformer was excited in a soundproof chamber under the conditions of maximum magnetic flux density Bm = 1.7 T and frequency of 50 Hz, and the noise level (dBA) was measured using a sound level meter. The results are shown in Table 4.

As can be understood from Table 4, in each of E2, E4, L2, and L4 satisfying the structure according to the present disclosure, a transformer with low iron loss and low noise was obtained. Reduction in transformer noise was more noticeable when σBr was smaller, as in FIG. 4.

### [Table 4]

**Table 4**

| Test No. | Irradiation condition | Slab chemical composition | Type of energy beam | σBr [T] | Transformer core loss [W/kg] | Transformer noise [dB] | Remarks |
|---|---|---|---|---|---|---|---|
| 1 | E1 | Table 1 | Electron beam | **0.39** | 0.72 | **52.6** | **Comparative Example** |
| 2 | E2 | Table 1 | Electron beam | 0.29 | 0.72 | 40.3 | Example |
| 3 | E3 | Table 1 | Electron beam | **0.44** | 0.74 | **56.3** | **Comparative Example** |
| 4 | E4 | Table 1 | Electron beam | 0.36 | 0.74 | 40.7 | Example |
| 5 | L1 | Table 1 | Laser | **0.39** | 0.74 | **55.1** | **Comparative Example** |
| 6 | L2 | Table 1 | Laser | 0.32 | 0.74 | 41.9 | Example |
| 7 | L3 | Table 1 | Laser | **0.40** | 0.75 | **60.8** | **Comparative Example** |
| 8 | L4 | Table 1 | Laser | 0.38 | 0.75 | 45.3 | Example |
| 9 | E1 | Table 2 | Electron beam | **0.40** | 0.72 | **49.6** | **Comparative Example** |
| 10 | E2 | Table 2 | Electron beam | 0.25 | 0.72 | 40.3 | Example |
| 11 | E3 | Table 2 | Electron beam | **0.45** | 0.74 | **55.6** | **Comparative Example** |
| 12 | E4 | Table 2 | Electron beam | 0.28 | 0.74 | 40.7 | Example |
| 13 | L1 | Table 2 | Laser | **0.45** | 0.74 | **55.1** | **Comparative Example** |
| 14 | L2 | Table 2 | Laser | 0.30 | 0.74 | 41.5 | Example |
| 15 | L3 | Table 2 | Laser | **0.55** | 0.75 | **60.6** | **Comparative Example** |
| 16 | L4 | Table 2 | Laser | 0.37 | 0.75 | 42.8 | Example |
| 17 | RO | Table 2 | **N/A** | 0.36 | **0.84** | 41.0 | **Comparative Example** |

### REFERENCE SIGNS LIST

- 1: beveled material
- 11: leg
- 12: yoke
- 2: joint part

## Claims

1. A grain-oriented electrical steel sheet comprising, on at least one of both surfaces thereof, a plurality of strain regions that extend linearly in a direction transverse to a rolling direction and are arranged at intervals in the rolling direction,
wherein a standard deviation σBr of residual magnetic flux density Br determined from a hysteresis loop measured by exciting the steel sheet to 1.7 T with the rolling direction as a magnetization direction is 0.38 or less.

2. The grain-oriented electrical steel sheet according to claim 1, wherein the standard deviation σBr is 0.36 or less.

3. A stacked iron core produced by stacking a plurality of the grain-oriented electrical steel sheet according to claim 1 or 2.
